# EUROPEAN PATENT SPECIFICATION

(11) **EP 4 752 499 B1**
(45) Date of publication and mention of the grant of the patent: **25.11.2026**
(21) Application number: 25202229.8
(22) Date of filing: 15.09.2025
(51) Int. Cl.: G01B 11/24, G06T 7/00

(54) **STRIP SHAPE DETECTING DEVICE FOR METAL STRIP, ROLLING MILL, AND DETECTING METHOD**
BANDFORMERKENNUNGSVORRICHTUNG FÜR METALLBAND, WALZWERK UND ERKENNUNGSVERFAHREN
DISPOSITIF DE DÉTECTION DE FORME DE BANDE POUR BANDE MÉTALLIQUE, LAMINOIR ET PROCÉDÉ DE DÉTECTION

(30) Priority: 29.11.2024 JP 2024208450
(43) Date of publication of application: 03.06.2026
(73) Proprietor: Primetals Technologies Japan, Ltd., Hiroshima-shi, Hiroshima 733-8553 (JP)
(72) Inventor: MOCHIZUKI, Chitoshi, Hiroshima-shi 733-8553 (JP); KANEMORI, Shinya, Tokyo 100-8332 (JP)
(74) Representative: Strehl & Partner mbB

(56) References cited:
- EP-A1- 4 231 232
- WO-A1-2023/248448
- JP-B1- 7 537 039

## Description

### BACKGROUND OF THE INVENTION

### 1. Field of the Invention

The present invention relates to a strip shape detecting device for a metal strip, a rolling mill, and a detecting method.

### 2. Description of the Related Art

Japanese Patent No. 6808888 describes a failure determining device and a failure determining method that can readily determine a failure in a strip surface shape of a metal strip without using a special light source such as a rod-shaped light source, the failure determining device including: a roll that is installed with a rotational axis thereof extending in the width direction of a rolled steel strip, and raises the rolled steel strip upward; a camera for photographing an image including a raised area of the rolled steel strip raised upward by the roll; and a control device that determines a failure in the strip surface shape of the metal strip on the basis of the image photographed by the camera.

Japanese Patent No. 7130350 describes a strip shape determining device for a metal strip, a rolling mill, and a determining method that are less likely to be affected by a slight disturbance and a small obstacle occurring suddenly than in conventional, the strip shape determining device including: a camera installed so as to photograph an image including an area in which band-shaped reflected light crossing in a widthwise direction of the rolled metal strip appears; and an image processing computer that determines the strip shape of the metal strip on the basis of the image photographed by the camera, the image processing computer dividing the area within the image into a plurality of zones in the widthwise direction of the metal strip, and transmitting, as a signal, information corresponding to a widthwise distribution of strip buckling in a rolling direction on the basis of index information representing an area-related size of each of the divided zones.

### SUMMARY OF THE INVENTION

There are a large number of conventionally known technologies for detecting the quality of the strip shape of the metal strip rolled by a rolling mill, or, for example, the presence or absence of strip buckling on the basis of line-shaped or rod-shaped reflected light long in the widthwise direction of the metal strip.

The detecting method is based on a fact that when a change occurs in the strip shape with buckling occurring in a part thereof, the shape of the reflected light that has been in a line shape or a rod shape ceases to be the regular shape, and a part thereof is moved or displaced.

However, with a linear or rod-shaped illumination, a reflecting light area in the rolling direction at each position in the strip width direction which reflecting light area appears on a strip surface is narrow. Thus, the reflecting light area is significantly affected when a slight disturbance occurs due to, for example, a small obstacle or the like, so that an erroneous detection tends to occur.

The present inventor et al. found that the effect of the disturbance can be reduced when the detection is performed with an ordinary illumination by using a change in a band-shaped reflecting light area appearing on the strip surface in the vicinity of a curved portion of the metal strip raised by loopers for tension control installed between rolling mill stands on a rolling line, as disclosed in Japanese Patent No. 6808888, and the present inventor et al. conceived a technology disclosed in Japanese Patent No. 7130350 as a technology for utilizing the features of the band-shaped reflecting light area more.

The technology described in Japanese Patent No. 7130350 applies, to a Chebyshev polynomial, a widthwise distribution of the rolling direction length, the area, or the like of a band-shaped reflecting light area appearing on the surface of the strip at and in the vicinity of a curved portion of the metal strip raised by loopers for tension control installed between rolling mill stands of a rolling line, determines coefficients of the Chebyshev polynomial, and determines a widthwise distribution of strip buckling.

In actual rolling, the metal strip may vibrate at looper portions, and a phenomenon is observed in which the position, the rolling direction length, the area, or the like of the reflecting light area appearing on the strip surface of the metal strip being rolled varies at all times and thus the reflecting light area does not stably stay at a same position.

As a result of repeated diligent investigation of the technology described in Japanese Patent No. 7130350 described above by the present inventor et al., it has become clear that there occurs a case where the technology described in Japanese Patent No. 7130350 cannot handle such variations in the reflecting light area.

The present invention provides a strip shape detecting device for a metal strip, a rolling mill, and a detecting method that can evaluate a change in a strip buckle distribution with high accuracy even when a metal strip vibrates.

The present invention includes a plurality of means for solving the above-described problems. To cite an example of the means, there is provided, in a rolling facility, a strip shape detecting device for a rolled metal strip, the strip shape detecting device including: a camera installed so as to photograph images including a range in which a band-shaped area referred to as a reflecting light area in which illumination light is reflected, the band-shaped area crossing in a strip width direction, can be observed on a surface of the metal strip raised by a looper; and an image processing unit configured to detect a strip shape of the metal strip on a basis of the images photographed by the camera. The image processing unit is configured to: assign numbers 1, 2, 3, ..., k, ... to the obtained images in order; determine a most upstream position Pumin(k)i of pixel positions constituting an upstream side boundary line of the reflecting light area and determine a most downstream position Pdmax(k)i of pixel positions constituting a downstream side boundary line of the reflecting light area in a rolling direction of pixel coordinates in an (i) zone as each of divided zones (i) (i = 1 to j) obtained by j-dividing the reflecting light area in the strip width direction in an (k)th image; for each of F images from an image number (k - F + 1) to an image number (k) as two or more obtained images, extract data representing a position on a most upstream side as first positional data from among F pieces of data from Pumin(k - F + 1)i to Pumin(k)i and reset the first positional data as Pure_min(k)i as data of the (k)th image; extract data representing a position on a most downstream side as second positional data from among F pieces of data from Pdmax(k - F + 1)i to Pdmax(k)i and reset the second positional data as Pdre_max(k)i as data of the (k)th image; calculate a difference [Pdre_max(k)i - Pure_min(k)i] between the pieces of positional data in the rolling direction for each divided zone (i), set [Pdre_max(k)i - Pure_min(k)i] as information D(k)i corresponding to a maximum rolling direction length of the reflecting light area in the (k)th image, and make a value of the information D(k)i correspond to a center position in the strip width direction of the divided zone (i); providing a value indicative of a position in the strip width direction is referred to as a variable (x), standardize a position in the strip width direction within a strip width region in the reflecting light area in the image into a range of -1 ≤ x ≤ 1, set values of j pieces of information D(k)i as an index corresponding to a rolled metal strip buckle distribution in the strip width direction obtained from the (k)th image, change a notation of the position in the strip width direction to (x), and apply the values of the j pieces of information D(k)i to a Chebyshev polynomial E(x) = C₀ ' + C₁ ' × x + C₂' × (2x² - 1) + C₄ ' × (8x⁴ - 8x² + 1) (where -1 ≤ x ≤ 1), the Chebyshev polynomial including only such a zeroth order term, a first order term, a second order term, and a fourth order term of x that D(k)i = E(xi); and determine coefficients (C₀', C₁', C₂', and C₄') of the Chebyshev polynomial from E(xi) having j values (xi) of x, and transmit the coefficient (C₁') of the first order term as a signal representing a detected result of the rolled metal strip buckle distribution of a first order component in the strip width direction in the (k)th image, where xi denotes, by an (x) notation, the center position in the strip width direction of the divided zone (i) obtained by j-dividing the reflecting light area in the strip width direction, and F, i, j, and k are integers.

According to the present invention, it is possible to evaluate a change in the strip buckle distribution during rolling with high accuracy even when the metal strip vibrates. Problems, configurations, and effects other than those described above will be made apparent by the following description of embodiments.

### BRIEF DESCRIPTION OF THE DRAWINGS

FIG. 1 is a diagram illustrating an example of an outline of a rolling facility including a strip shape detecting device for a metal strip according to an embodiment of the present invention;
FIG. 2 is a diagram illustrating an example of a state in which reflected light of an illumination appears in a substantially rectangular band shape in a strip width direction on the surface of the metal strip in a looper portion between rolling mill stands at a time of operation in the rolling facility;
FIG. 3 is a diagram illustrating an example of a state in which the reflected light of the illumination appears in an indefinite band shape in the strip width direction on the surface of the metal strip in the looper portion between the rolling mill stands at a time of operation in the rolling facility;
FIG. 4 is a diagram illustrating a definition of a leveling amount (Gd - Gw) when (Gd = Gw);
FIG. 5 is a diagram illustrating the definition of the leveling amount (Gd - Gw) when (Gd > Gw);
FIG. 6 is a diagram illustrating an example of relation between a Chebyshev coefficient first order component (C1') and the leveling amount by using an "index A" obtained by a conventional technology;
FIG. 7 is a diagram illustrating an example of the relation between the Chebyshev coefficient first order component (C₁ ') and the leveling amount by using an "index B" obtained by the present invention;
FIG. 8 is a diagram illustrating an example of obtaining a maximum length D(k)i in a rolling direction of a reflecting light area with consideration given to variation of boundary lines on an upstream side and a downstream side of the reflecting light area from a (k)th image in the strip shape detecting device for a metal strip according to the embodiment;
FIG. 9 is a diagram illustrating an example of a method of equally dividing the strip width direction in the strip shape detecting device for a metal strip according to the embodiment;
FIG. 10 is a diagram illustrating an example of a method of unequally dividing the strip width direction in the strip shape detecting device for a metal strip according to the embodiment;
FIG. 11 is a flowchart of detecting a strip shape in the strip shape detecting device for a metal strip according to the embodiment; and
FIG. 12 is a diagram illustrating an example of a display screen of a monitor illustrating a zeroth order component, a first order component, a second order component, and a fourth order component of x of a Chebyshev polynomial in the strip shape detecting device for a metal strip according to the embodiment.

### DESCRIPTION OF THE PREFERRED EMBODIMENTS

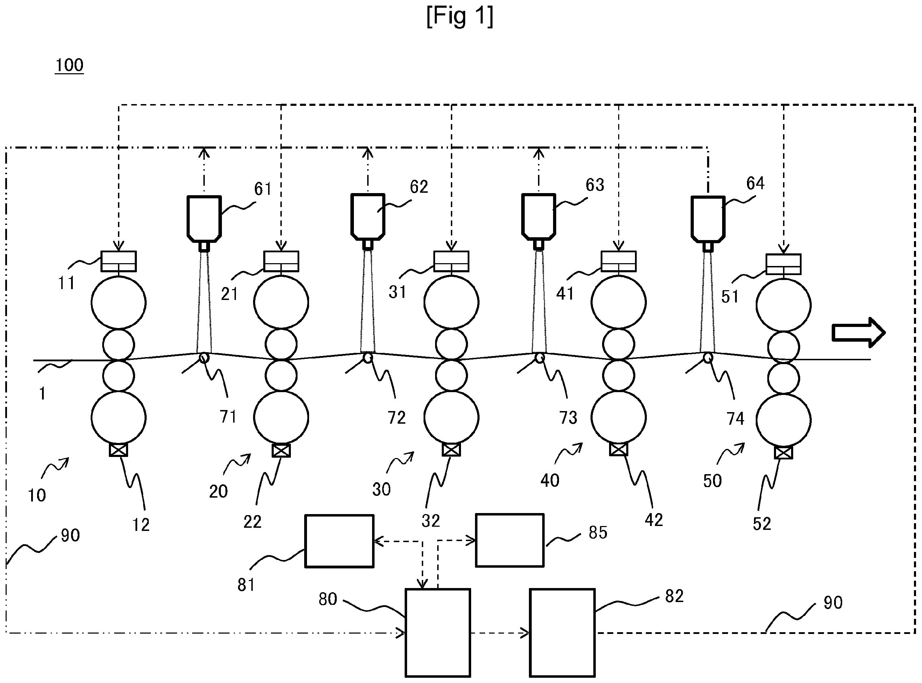

An embodiment of a strip shape detecting device for a metal strip, a rolling mill, and a detecting method according to the present invention will be described with reference to FIGS. 1 to 12. Incidentally, in the drawings used in the present specification, identical or corresponding constituent elements are identified by identical or similar reference numerals, and repeated description of these constituent elements may be omitted.

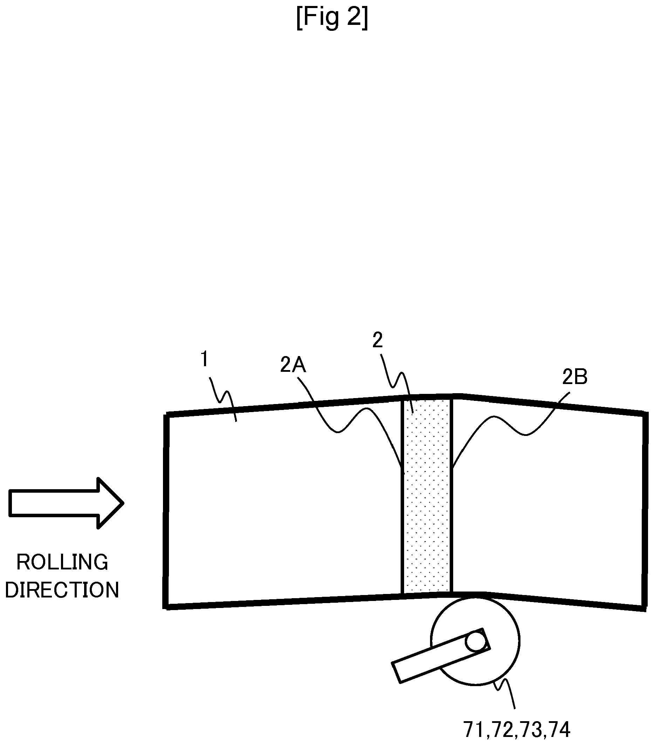

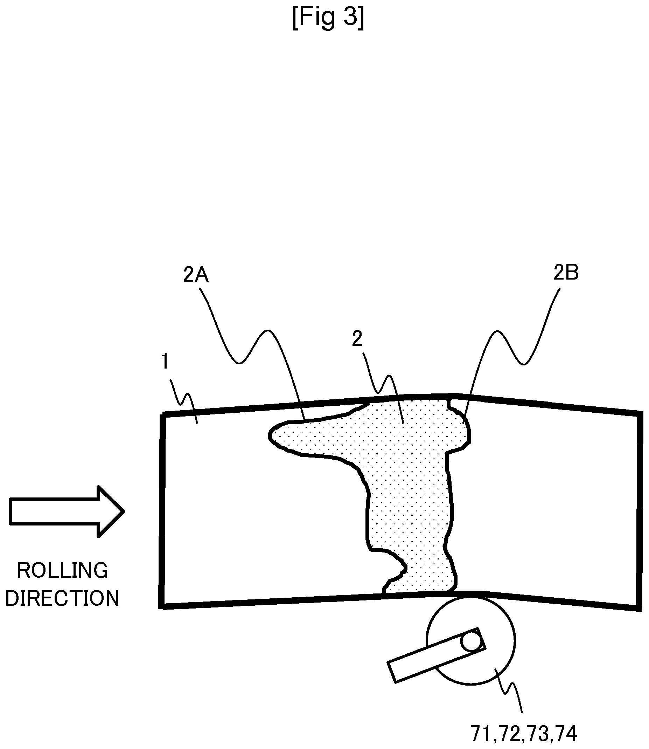

A general configuration of a rolling facility including the strip shape detecting device for a metal strip will first be described with reference to FIGS. 1 to 3. FIG. 1 is a schematic diagram illustrating a configuration of the strip shape detecting device for a metal strip and the rolling facility including the strip shape detecting device according to the present embodiment. FIG. 2 and FIG. 3 are diagrams illustrating an example of a state in which reflected light of an illumination appears in a band shape on the surface of the metal strip in a looper portion between rolling mill stands at a time of operation in the rolling facility.

The rolling facility 100 for rolling the metal strip 1 illustrated in FIG. 1 includes an F1 rolling mill stand 10, an F2 rolling mill stand 20, an F3 rolling mill stand 30, an F4 rolling mill stand 40, an F5 rolling mill stand 50, cameras 61, 62, 63, and 64, loopers 71, 72, 73, and 74 for tension control, an image processing computer 80, a database 81, a control device 82, a monitor 85, and the like.

The F1 rolling mill stand 10, the F2 rolling mill stand 20, the F3 rolling mill stand 30, the F4 rolling mill stand 40, the F5 rolling mill stand 50, the cameras 61, 62, 63, and 64, the image processing computer 80, the database 81, the control device 82, and the monitor 85 are connected to one another by a communication line 90.

Of these, the cameras 61, 62, 63, and 64, the loopers 71, 72, 73, and 74, the image processing computer 80, and the database 81 constitute the strip shape detecting device for the metal strip 1 according to the present invention.

It is to be noted that the rolling facility 100 is not limited to the configuration in which five rolling mill stands are installed as illustrated in FIG. 1, but at least two rolling mill stands or more suffice for the rolling facility 100.

The F1 rolling mill stand 10, the F2 rolling mill stand 20, the F3 rolling mill stand 30, the F4 rolling mill stand 40, and the F5 rolling mill stand 50 respectively include top work rolls and bottom work rolls, top backup rolls and bottom backup rolls supporting the top work rolls and the bottom work rolls by being in contact with the top work rolls and the bottom work rolls, respectively, roll gap cylinders 11, 21, 31, 41, and 51 provided to upper portions of the top backup rolls, and load detectors 12, 22, 32, 42, and 52. Incidentally, a six-high configuration can be adopted in which intermediate rolls are further provided between the respective work rolls and the respective backup rolls.

The looper 71 is a roll for tension control installed between the F1 rolling mill stand 10 and the F2 rolling mill stand 20. The rotational axis of the looper 71 is disposed so as to extend in the width direction of the metal strip 1 such that the metal strip 1 in a moving state is mounted on the roll, and the looper 71 is installed so as to raise the metal strip 1 upward and hold the metal strip 1. Incidentally, the looper 71 may be, for example, one that biases the metal strip 1 upward by a spring or the like, one that raises the metal strip 1 by, for example, driving a hydraulic cylinder or a motor, or the like.

Similarly, the looper 72 for tension control is installed between the F2 rolling mill stand 20 and the F3 rolling mill stand 30, the looper 73 for tension control is installed between the F3 rolling mill stand 30 and the F4 rolling mill stand 40, and the looper 74 for tension control is installed between the F4 rolling mill stand 40 and the F5 rolling mill stand 50.

The camera 61 is installed so as to photograph an image of the surface of the metal strip 1 including a range in which an area referred to as a reflecting light area 2 in which band-shaped illumination light crossing in a strip width direction appears to be reflected can be observed on the surface of the metal strip 1 rolled and curved by being raised by the looper 71. Preferably, the camera 61 can be installed on the outside in the strip width direction of the metal strip 1 when the metal strip 1 is viewed from above. The data of the image photographed by the camera 61 is transmitted to the image processing computer 80 via the communication line 90.

In addition, the camera 62 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and raised by the looper 72. The camera 63 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and raised by the looper 73. The camera 64 is installed at a position for photographing an image of the surface of the metal strip 1 including a range in which an area referred to as a reflecting light area 2 in which band-shaped illumination light crossing in the strip width direction appears to be reflected can be observed on the surface of the metal strip 1 rolled and raised by the looper 74. The data of the images photographed by the cameras 62, 63, and 64 is transmitted to the image processing computer 80 via the communication line 90.

As with the camera 61, preferably, the cameras 62, 63, and 64 are also installed on the outside in the strip width direction of the metal strip 1 when the metal strip 1 is viewed from above.

By using these cameras 61, 62, 63, and 64, a photographing step is performed which photographs, by using the cameras 61, 62, 63, and 64, an image including an area in which band-shaped reflected light crossing in the strip width direction of the rolled metal strip 1 appears.

It is possible to further provide an illumination for illuminating the raised photographed areas of the metal strip 1 raised upward by the rolls, the photographed areas being mainly photographed by the cameras 61, 62, 63, and 64. This illumination may be an ordinary illumination disposed as appropriate on a ceiling of a rolling plant in which the rolling facility 100 is installed or the like. The present invention does not need a special new illumination facility. However, a dedicated illumination may be provided.

The image processing computer 80 is a device that performs various kinds of processing (including an image processing step) for detecting the strip shape of the metal strip 1 on the basis of the images photographed by the cameras 61, 62, 63, and 64. Preferably, this image processing computer 80 is an execution entity of the image processing step.

For example, the image processing of an image including a raised area as a curved vicinity of the metal strip 1 rolled as illustrated in FIG. 2 or FIG. 3 and raised by the loopers 71, 72, 73, and 74 identifies, as the reflecting light area 2, a region including boundaries on the upstream side and downstream side of a part in which the luminance of reflected light on the surface of the metal strip 1 appearing in the image is higher than the value of a specific luminance.

Here, in the reflecting light area 2 in which band-shaped reflected light crossing in the strip width direction of the metal strip 1 appears, when a strip buckle distribution in a rolling direction (longitudinal direction of the metal strip) at each position in the strip width direction of the metal strip 1 is uniform, the surface of the metal strip 1 is flat, the strip shape is excellent, and a degree of steepness is similar and low in the strip width direction. Thus, as illustrated in FIG. 2, there is a small distribution difference in rolling direction length of the reflecting light area 2 at each position in the strip width direction. Therefore, an upstream side boundary line 2A and a downstream side boundary line 2B as boundary lines of the reflecting light area 2 obtained by the illumination are substantially parallel with each other with intervals between the upstream side boundary line 2A and the downstream side boundary line 2B substantially uniform in the strip width direction, and parameters such as an area value and an average length in the rolling direction of each zone in a case where the reflecting light area 2 is equally divided into a plurality of zones in the strip width direction are substantially uniform in all of the zones.

On the other hand, when there is a difference in buckling (for example, an edge buckle or a center buckle) in the rolling direction according to a position in the strip width direction, the metal strip is not flat, the strip shape is defective, and the degree of steepness is different in the strip width direction. Consequently, the area in which the reflected light appears on the strip surface is different, either one or both of the upstream side boundary line 2A and the downstream side boundary line 2B as the boundary lines of the reflecting light area 2 obtained by the illumination undulate as illustrated in FIG. 3, and the intervals between the upstream side boundary line 2A and the downstream side boundary line 2B of the reflecting light area 2 are nonuniform in the strip width direction. Therefore, the parameters such as the area value and the average length in the rolling direction of each zone in the case where the reflecting light area 2 is equally divided into the plurality of zones in the strip width direction are nonuniform in each zone.

Here, in Japanese Patent No. 6808888 described above, a strip width direction distribution of the rolling direction length, the area, or the like of the reflecting light area 2 appearing on the surface of the metal strip 1 in the vicinity of a curved portion of the metal strip 1 raised by the loopers 71, 72, 73, and 74 is set as an index of a strip buckle distribution due to rolling, and curve fitting is performed by using a Chebyshev polynomial of the following Equation (1). 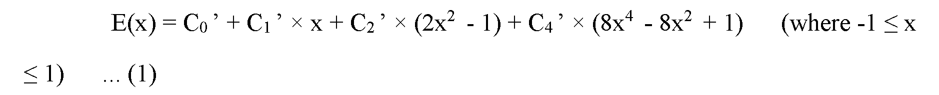 E(x)= C0 ' + C1 ' × x + C2 ' × (2x2 - 1) + C4 ' × (8x4 - 8x2 + 1) (where -1 ≤ x ≤ 1) (1)

The Chebyshev polynomial assumes that, for example, as an index of the strip buckle distribution in the strip width direction due to rolling, that is, as the rolling direction length of the reflecting light area 2 on the surface of the metal strip 1 at the loopers 71, 72, 73, and 74, E(x) indicates the rolling direction length of the reflecting light area 2 on the surface of the metal strip 1 at the loopers 71, 72, 73, and 74, and represents magnitude corresponding to a strip buckle due to rolling. Incidentally, C₀ ', C₁ ', C₂', and C₄ ' respectively denote the values of respective coefficients when the Chebyshev polynomial assumed to represent magnitude corresponding to the strip buckle distribution in the strip width direction is separated into respective components, that is, a zeroth order component, a first order component, a second order component, and a fourth order component of x. x denotes a standardized position in the strip width direction. For example, x = -1 indicates a strip width edge portion position on a drive side (DS), and x = 1 indicates a strip width edge portion position on a work side (WS). That is, in this case, when the coefficient (C₁') of the first order component of x in the Chebyshev polynomial is a positive value, the value indicates that a strip buckle on the work side (WS) is large. In addition, when the coefficient (C₂ ') of the second order component of x is a positive value, the value indicates that a buckle at a strip width edge portion is large as compared with a strip width central portion. In addition, when the coefficient (C₄ ') of the fourth order component of x is a negative value, the value indicates that a quarter buckle in the strip width direction is large.

In the following, a definition of a leveling amount will be illustrated.

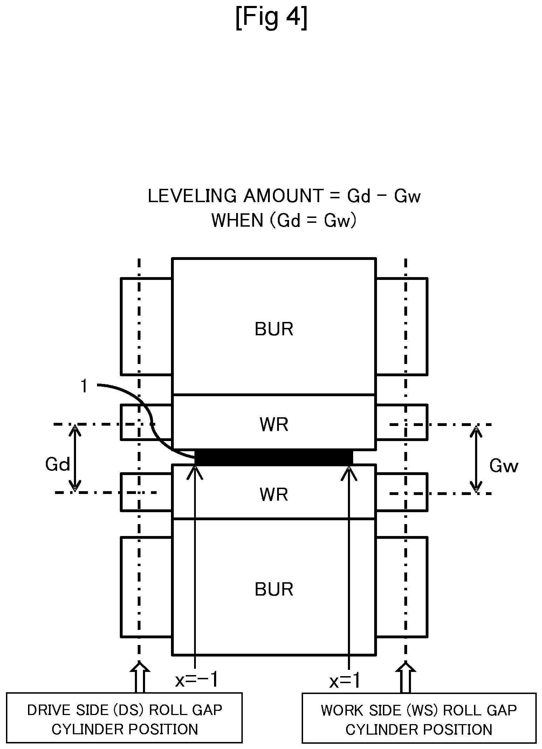

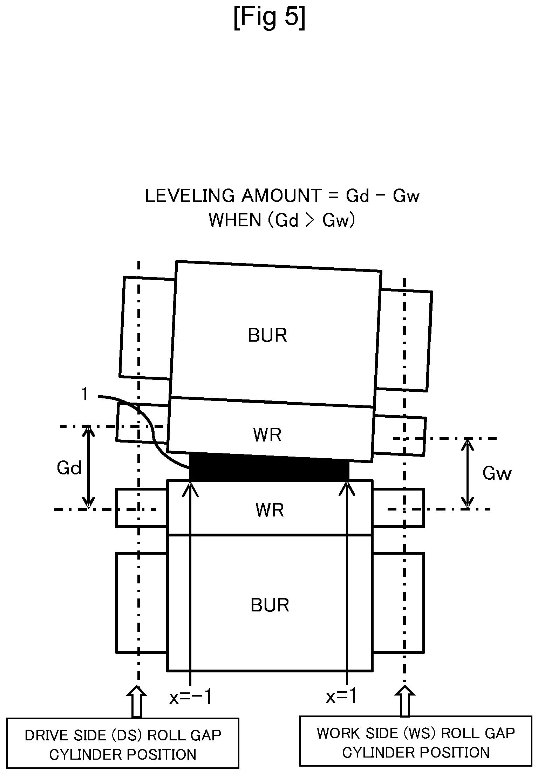

As illustrated in FIG. 4 and FIG. 5, the leveling amount is defined as a value (Gd - Gw) obtained by subtracting a distance Gw between the axes of top and bottom work rolls at the position of a roll gap cylinder on the work side (WS) from a distance Gd between the axes of the top and bottom work rolls at the position of a roll gap cylinder on the drive side (DS).

Suppose that a strip thickness at a strip width central position does not change when the leveling amount is changed. Hence, as illustrated in FIG. 5, when the leveling amount is increased as compared with a state illustrated in FIG. 4, the strip thickness on the drive side (DS) is increased, the strip thickness on the work side (WS) is decreased, and a strip buckle on the work side (WS) is increased. When the value (C₁') of the first order component of the Chebyshev coefficient obtained by the present method is a positive value, the value indicates that a strip buckle on the work side (WS) is large. When the value (C₁') of the first order component is a negative value, the value indicates that a strip buckle on the drive side (DS) is large.

The reflecting light area 2 is divided by a specific number in the strip width direction, the rolling direction length of the reflecting light area 2 as an index of the strip buckle distribution in the strip width direction in each divided zone is, for example, subjected to averaging processing within the divided zone, and a value resulting from the averaging processing is set again as the Chebyshev polynomial E(x) assumed to represent magnitude corresponding to the strip buckle distribution in the strip width direction. Suppose that E(x) obtained here is set as an "index A," and that the Chebyshev coefficient is obtained by the conventional technology.

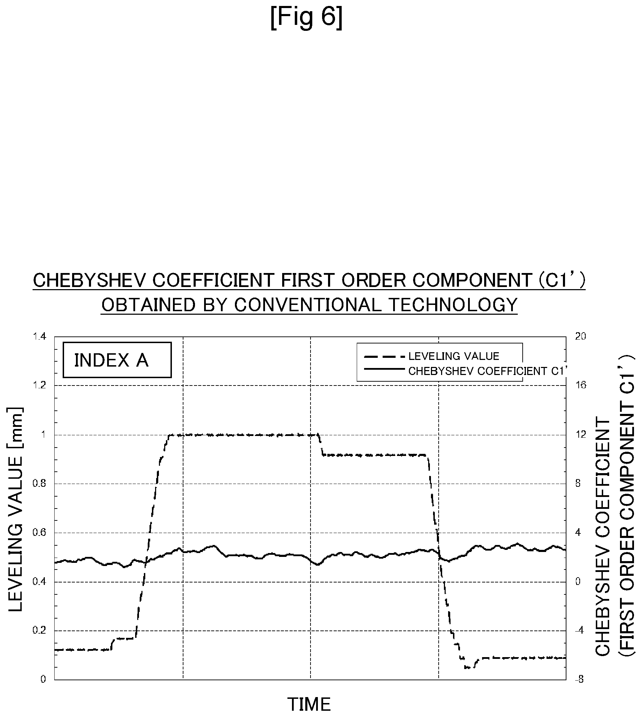

FIG. 6 illustrates relation between the Chebyshev coefficient first order component (C₁ ') resulting from the application of the index A obtained by an index extracting method in the conventional technology and the leveling amount, under conditions where the leveling amount of the rolling mill was intentionally changed during actual hot rolling and it was considered that the first order component (C₁') as a coefficient of the Chebyshev polynomial would obviously change.

As illustrated in FIG. 6, it can be confirmed that the Chebyshev coefficient first order component (C₁ ') obtained by changes in the leveling amount and the index A is observed to hardly have correlation with the changes in the leveling amount.

Hence, there was estimated to be a case where the extracting method of averaging the length in the rolling direction in each divided zone of the reflecting light area 2 and setting the result as the index A was unable to measure actual changes in the strip shape. The present inventor et al. therefore considered that there might be room for improvement in an index selecting method.

At the positions of the loopers 71, 72, 73, and 74, vibration of the metal strip 1 is observed. It is estimated that the obtained Chebyshev coefficient is smoothed by the averaging processing of varying data such as the position, the rolling direction length, or the area of the reflecting light area 2 appearing on the strip surface of the metal strip being rolled, and consequently the correlation with the Chebyshev coefficient first order component (C₁') resulting from the application of the changes in the leveling amount and the index A is not clearly obtained.

That is, the vibration of the metal strip 1 is affected from a strip buckle due to rolling. It is considered that the strip buckle distribution due to rolling can be reflected in the Chebyshev coefficient by extracting this effect. As a result of diligent investigation, the following new index extracting method has been devised. A new index obtained according to the present invention will be referred to as an "index B."

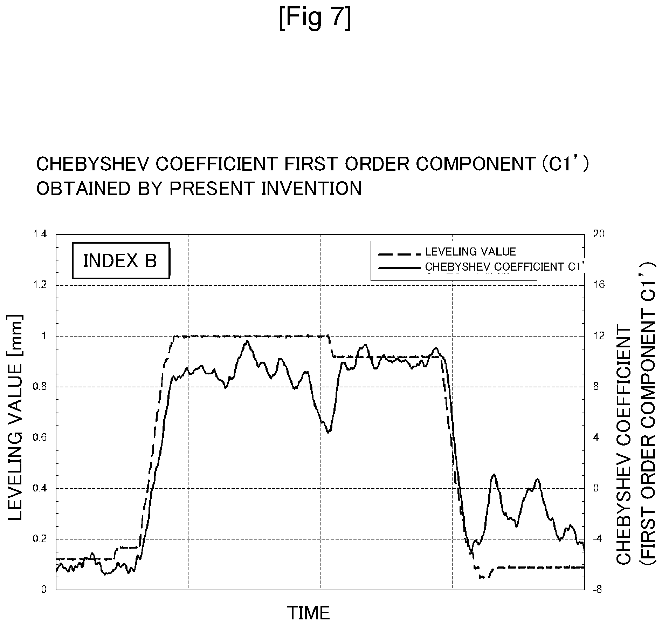

FIG. 7 illustrates relation between the Chebyshev coefficient first order component (C₁ ') obtained according to the present embodiment and the leveling amount, under conditions where the leveling amount of the rolling mill was intentionally changed during actual hot rolling as in the foregoing and it was considered that the first order component (C₁') as a coefficient of the Chebyshev polynomial would obviously change.

As illustrated in FIG. 7, it can be confirmed that changes in the Chebyshev coefficient first order component (C₁ ') obtained by changes in the leveling amount and processing in the present embodiment described above are observed to have a certain degree of correlation. That is, it is considered that the extracting method of the index B can extract the effect of a strip buckle due to rolling.

Hence, it is understood that the index B obtained by the processing in the present embodiment is preferably adopted at a time of determining the strip buckle distribution in the strip width direction due to rolling by applying, to the Chebyshev polynomial, the strip width direction distribution of a rolling direction maximum length of the reflecting light area 2 appearing on the surface of the metal strip 1 in the vicinity of a curved portion of the metal strip 1 raised by the loopers 71, 72, 73, and 74 installed between the rolling mill stands on a rolling line. The extracting method of the index B will be described in the following.

For each of the obtained images, the image processing computer 80 in the present embodiment performs the following two pieces of analysis processing by using the obtained image. First analysis processing performed by the image processing computer 80 assigns numbers 1, 2, 3, ..., k, ... to the obtained images in order, and determines a rolling direction position Pumin(k)i of a pixel located most upstream among the positions in the rolling direction of pixels constituting the upstream side boundary line 2A of the reflecting light area 2 within each of divided zones (i) (i = 1 to j) obtained by j-dividing the reflecting light area 2 in the strip width direction in an (k)th image. In addition, similarly, a rolling direction position Pdmax(k)i of a pixel located most downstream among the positions in the rolling direction of pixels constituting the downstream side boundary line 2B of the reflecting light area 2 is determined. This data is stored in the database 81.

Second analysis processing performed by the image processing computer 80 extracts first positional data of a most upstream position in the rolling direction within the divided zone (i) from among F pieces of data from Pumin(k - F + 1)i to Pumin(k)i for respective F images from an image number (k - F + 1) to an image number (k), the F images being stored in the database 81, and sets the first positional data as Pure_min(k)i as data of the (k)th image, and extracts second positional data of a most downstream position in the rolling direction within the divided zone (i) from among F pieces of data from Pdmax(k - F + 1)i to Pdmax(k)i and sets the second positional data as Pdre_max(k)i as data of the (k)th image. These pieces of data are stored in the database 81.

A difference [Pdre_max(k)i - Pure_min(k)i] between the pieces of positional data in the rolling direction is calculated for each divided zone (i), resulting j values of [Pdre_max(k)i - Pure_min(k)i] are represented as D(k)i as the index B (maximum length in the rolling direction of the reflecting light area 2) corresponding to a rolled metal strip buckle in the (k)th image, D(k)i is made to correspond to a center position in the strip width direction of each divided zone (i), and providing a value indicative of a position in the strip width direction is referred to as a variable (x), D(k)i in which a position in the strip width direction within a strip width range is made to correspond to a position x standardized into a range of -1 ≤ x ≤ 1 is set as E(xi) of the (k)th image. Incidentally, xi represents the center position in the strip width direction of the divided zone (i) by an (x) notation.

The image processing computer 80 applies the values of the center position xi in the strip width direction of each divided zone (i) in the (k)th image and E(xi) (E(xi) = D(k)i) to the Chebyshev polynomial of Equation (1) for each divided zone (i), determines coefficients (C₀', C₁', C₂', and C₄') of the Chebyshev polynomial from an equation of an approximate curve thereof by using a least-square method, and transmits the first order coefficient (C₁ ') as a signal representing a detected result of the rolled metal strip buckle distribution of the first order component in the strip width direction.

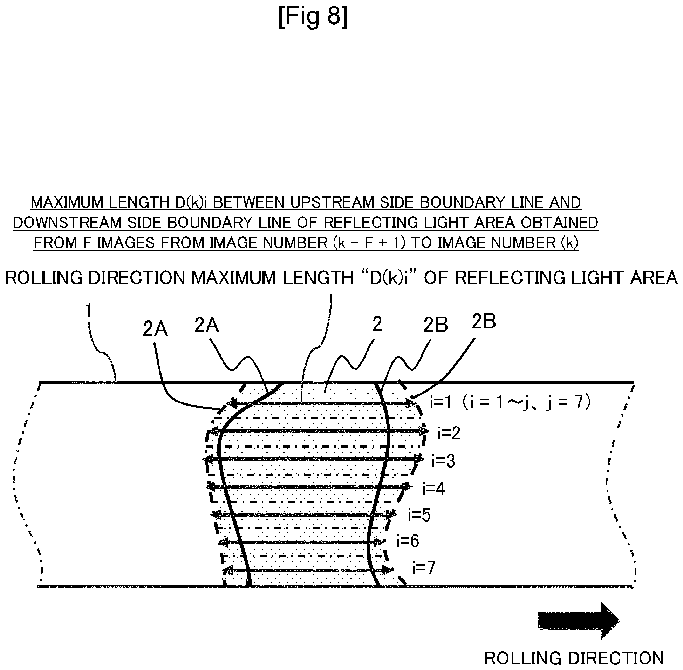

As illustrated in FIG. 8, the maximum length D(k)i in the rolling direction of the reflecting light area 2 is one that the value of [Pdre_max(k)i - Pure_min(k)i] obtained in each divided zone (i) is made to correspond to the center position of each divided zone (i) in the strip width direction.

Incidentally, preferably, the image processing computer 80 can further transmit, in addition to the first order coefficient (C₁ '), either one or more of the second order coefficient (C₂ ') and the fourth order coefficient (C₄ ') as a signal representing a detected result of the rolled metal strip buckle distribution(s) of one or more of the second order component and the fourth order component in the strip width direction.

The database 81 functions also as a recording medium on which various kinds of parameters used at a time of operating the rolling facility 100 and the like are recorded.

In the present embodiment, when k ≥ F, k and F being integers, the database 81 can store the first positional data Pure_min(k)i (i = 1 to j) and the second positional data Pdre_max(k)i (i = 1 to j) in the rolling direction for each of the F images obtained consecutively from the obtainment of the (k - F + 1)th image to the obtainment of the (k)th image and each of the j zones (i) into which the reflecting light area 2 appearing on the surface of the metal strip is divided in the strip width direction.

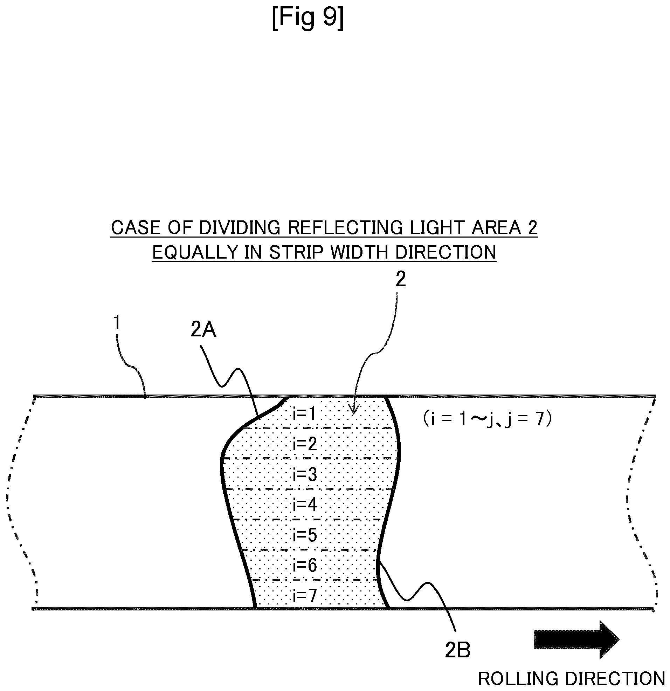

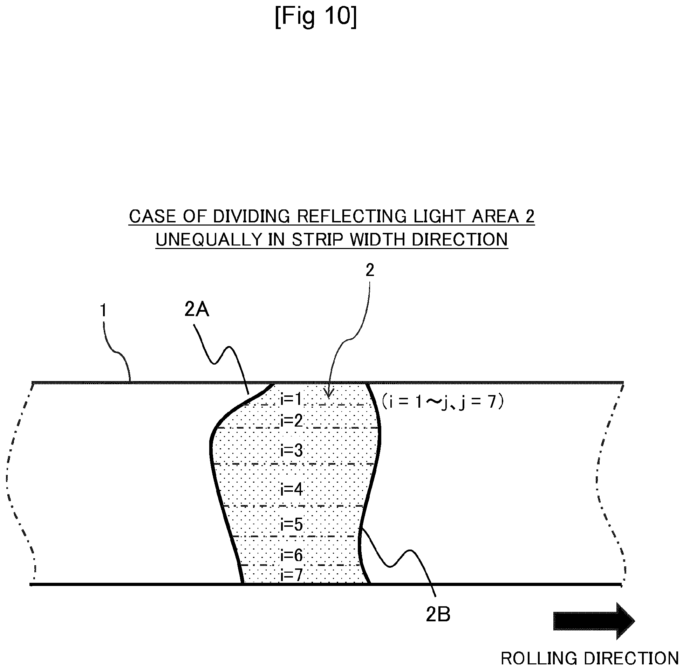

Here, with regard to a method of dividing the reflecting light area 2, each of the divided zones (i) (i = 1 to j) j-divided in the strip width direction may be obtained by equally dividing the reflecting light area 2 into the j zones as illustrated in FIG. 9, or may be obtained by unequally dividing the reflecting light area 2 into the j zones with respective optional widths as illustrated in FIG. 10.

Returning to FIG. 1, the control device 82 is a device that controls the operation of each apparatus within the rolling facility 100. In the present embodiment, the control device 82 is a device that performs various kinds of control in response to the detection of the strip shape of the metal strip 1 in the image processing computer 80.

The image processing computer 80, the database 81, and the control device 82 can be constituted by a computer having the monitor 85 such as a liquid crystal display to be described later, an input device, a storage device, a CPU, a memory, and the like. These may be constituted by one computer, and may be constituted by respective different computers. There is thus no particular limitation.

The control of the operation of the various apparatuses by the image processing computer 80 and the control device 82 is performed on the basis of various kinds of programs recorded in the storage device. Incidentally, the processing of the operation control performed by the image processing computer 80 and the control device 82 may be integrated in one program, or respective pieces of the processing may be separated in a plurality of programs, or there may be a combination thereof. In addition, a part or all of the programs may be implemented by dedicated hardware, or may be modularized.

The monitor 85 includes a display apparatus such as a display and an audio apparatus such as an alarm. The monitor 85 is a device for notifying an operator of work for handling a problem, for example, when the image processing computer 80 detects that the problem has occurred in the strip shape. A display is therefore often used as such a monitor 85.

Here, the image processing computer 80 described above includes a display signal section, and transmits a signal related to contents to be displayed on the monitor 85 to the control device 82 and the monitor 85.

During operation, the operator can check the state of the strip shape by visually checking a display screen of the monitor 85, the rolling mill stands themselves, and states between the rolling mill stands.

It is to be noted that there is no limitation to a configuration in which the operator is notified of the occurrence of the problem in the strip shape, and an operation for remedying the problem in the strip shape is automatically performed by the control device 82, but a configuration can be adopted in which the problem in the strip shape is only displayed on the monitor 85, or a configuration can be adopted in which the display on the monitor 85 is omitted, and only the operation for remedying the problem in the strip shape is automatically performed by the control device 82.

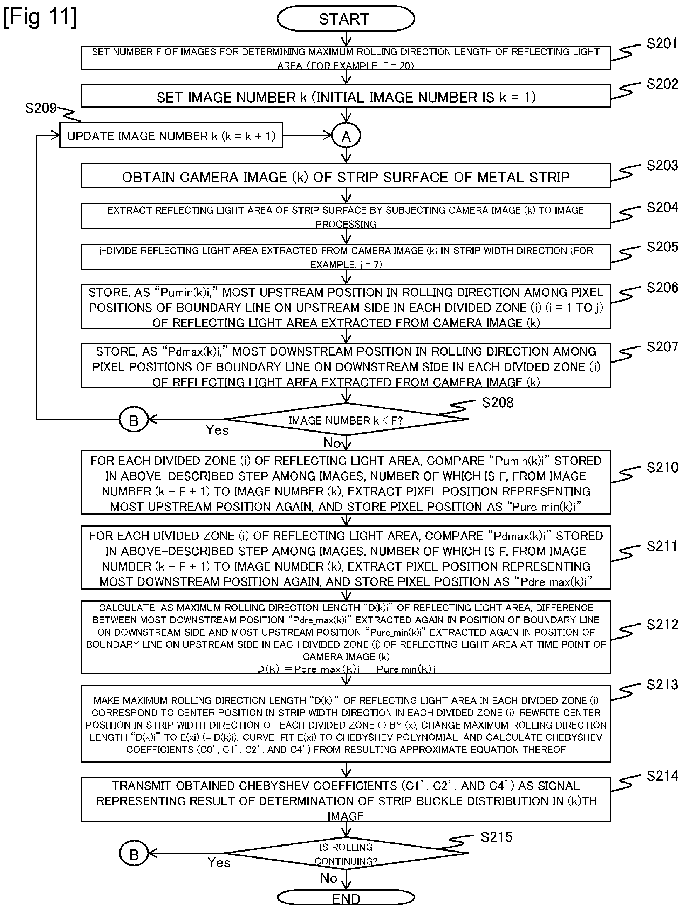

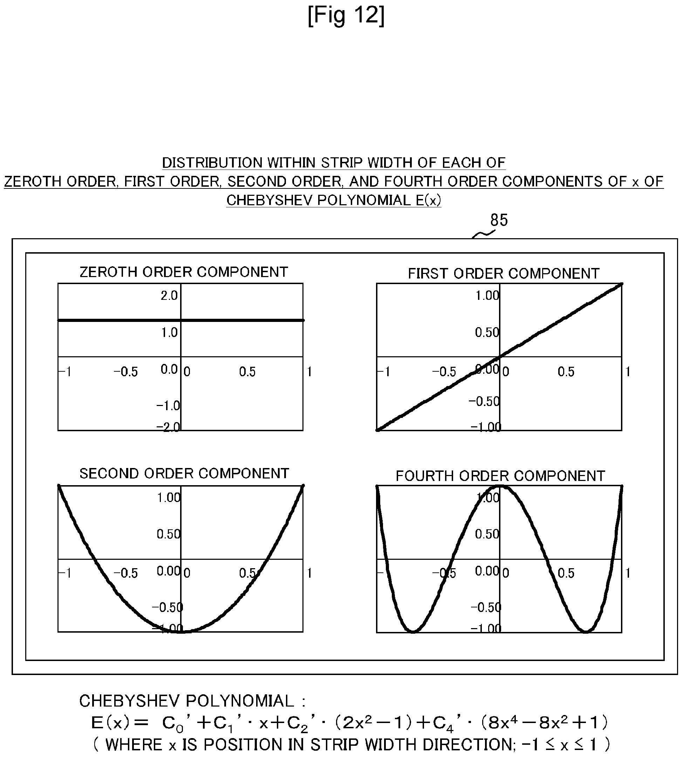

The strip shape detecting device for the metal strip 1 rolled in the present invention and a flow of the detecting method will next be described with reference to FIG. 11 and FIG. 12.

A method of calculating the index according to the present invention will be illustrated in a flowchart in FIG. 11.

As illustrated in FIG. 11, before a start of rolling or during the rolling, in the image processing computer 80, the number F of images (for example, F = 20) for determining a maximum rolling direction length of the reflecting light area 2 is set (step S201), and an image number k is set (step S202). Here, suppose that an initial value of the image number is k = 1.

Thereafter, the image processing computer 80 obtains a surface image (image number k) of the metal strip 1 in the vicinity of a curved portion of the metal strip 1 photographed by the cameras 61, 62, 63, and 64 and raised by the loopers 71, 72, 73, and 74 (step S203). Here, obtained images are assigned numbers such as 1, 2, 3, ..., k, ... in order of obtainment of the images.

Next, the image processing computer 80 subjects the image (image number k) photographed by the cameras 61, 62, 63, and 64 to image processing, and thereby extracts the reflecting light area 2 on the surface of the metal strip 1 in the vicinity of the curved portion of the metal strip 1 (step S204).

For example, the image processing computer 80 performs binarization processing on all of pixels appearing in a rolling surface image range selected in the image photographed by the cameras 61, 62, 63, and 64, and obtains an appropriate threshold value for a degree of lightness. The image processing computer 80 thereby obtains pixel coordinates constituting the upstream side boundary line 2A and the downstream side boundary line 2B observed in the strip width direction on the upstream side and downstream side of the reflecting light area 2 appearing on the surface of the metal strip, and identifies the reflecting light area 2. Details thereof can be those of a publicly known method.

Next, the image processing computer 80 j-divides the reflecting light area 2 extracted from the image (k) photographed by the cameras 61, 62, 63, and 64 in the strip width direction (for example, j = 7) (step S205).

Next, the image processing computer 80 selects a pixel at a most upstream position in the rolling direction among the positions of pixels constituting the upstream side boundary line 2A of the reflecting light area 2 within a range of each divided zone (i) (i = 1 to j) of the reflecting light area 2 extracted from the image (k) photographed by the cameras 61, 62, 63, and 64, and preferably stores the rolling direction pixel position as "Pumin(k)i" in the database 81 (step S206). In addition, the image processing computer 80 selects a pixel at a most downstream position in the rolling direction among the positions of pixels constituting the downstream side boundary line 2B of the reflecting light area 2, and preferably stores the rolling direction pixel position as "Pdmax(k)i" in the database 81 (step S207). These steps S206 and S207 are in no particular order. Steps S206 and S207 may be processed in parallel with each other, or step S207 may be processed before step S206.

Further, the image processing computer 80 determines whether or not Image Number k < F (step S208). When it is determined that Image Number k < F, the processing is advanced to step S209 to update the image number k (k = k + 1) (step S209), and the processing is advanced to step S203 to wait for the processing of the predetermined number of images to be performed. When it is determined in step S208 that Image Number k ≥ F, on the other hand, the processing is advanced to step S210.

Next, for each divided zone (i) of the reflecting light area 2, the image processing computer 80 compares "Pumin(k)i" stored in the above-described step S206 among the images the number of which is F from the image number (k - F + 1) to the image number (k), extracts a pixel position representing a most upstream position again, and preferably stores the pixel position as "Pure_min(k)i" in the database 81 (step S210). In addition, the image processing computer 80 compares "Pdmax(k)i" stored in the above-described step S207 among the images the number of which is F from the image number (k - F + 1) to the image number (k), extracts a pixel position representing a most downstream position as "Pdre_max(k)i" again, and preferably stores the pixel position in the database 81 (step S211).

Here, the rolling direction position of pixel coordinates in the images is assumed to increase toward the downstream side from the upstream side. Thus, in the divided zone (i), the notation of the most upstream position among the upstream side boundary line positions is described as "Pure _min(k)i," and the notation of the most downstream position among the downstream side boundary line positions is described as "Pdre_max(k)i."

Specifically, the database 81 is illustrated which, letting f be the number of images in the following Table 1 (example of resetting the first positional data (Pure_min(k)i) and the second positional data (Pdre_max(k)i) and an example of extracting the index B), for consecutive images from a (k - f + 1)th image to a (k)th image, stores upstream side data and downstream side data in each image in the case where the reflecting light area 2 is divided into the j zones. In each zone, the first positional data and the second positional data are further reset from the f images. D(k)i = [Pdre_max(k)i] - [Pure _min(k)i] is set by subtracting the first positional data from the second positional data. In the present invention, the value of D(k)i is set as the index B for the (k)th image. Incidentally, Pure_min(k)i and Pdre_max(k)i displayed in the table represent an example. Pumin in boldface type in Table 1 denotes the data of the most upstream position among the positions Pumin of the f images from the (k - f + 1)th image to the (k)th image. Pdmax in boldface type denotes the data of the most downstream position among the positions Pdmax of the f images from the (k - f + 1)th image to the (k)th image.

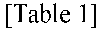

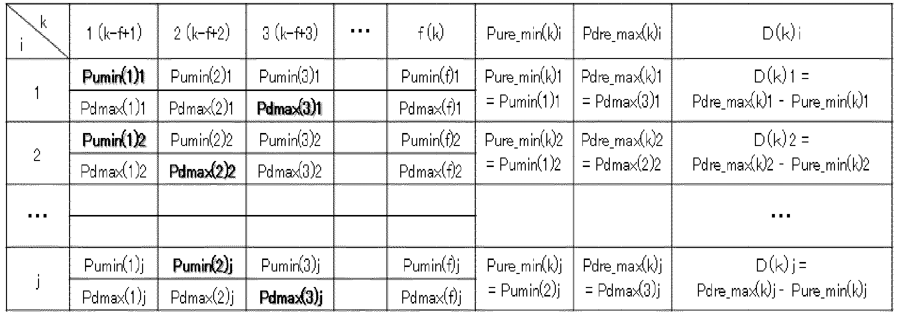

For example, in a case as of Table 1, a most upstream pixel in the rolling direction is selected among the positions of the pixels constituting the upstream side boundary line 2A of the reflecting light area 2 in a first zone as the divided zone i = 1 among the j zones into which the reflecting light area 2 is divided in the strip width direction, and the rolling direction position is Pumin(k)1 in the (k)th image. When the notation is changed to Pumin(1) 1 in the (k - f + 1)th image, Pumin(2)1 in the (k - f + 2)th image, Pumin(3)1 in the (k - f + 3)th image, ..., Pumin(f)1 in the (k)th image among the f images set as evaluation target images, and when a most upstream position among the positions Pumin(1/.../f)1 of these f images is Pumin(1)1 in the (k - f + 1)th image, Pumin(1)1 as the most upstream position in the rolling direction is reset and stored as "Pure_min(k)1" as the rolling direction position representing the most upstream position at the time of the image number k.

In addition, similarly, a most downstream pixel in the rolling direction is selected among the positions of the pixels constituting the downstream side boundary line 2B of the reflecting light area 2 in the first zone as the divided zone i = 1, and the rolling direction position is set as Pdmax(k)1 in the (k)th image. When the notation is changed to Pdmax(1)1 in the (k - f + 1)th image, Pdmax(2)1 in the (k - f + 2)th image, Pdmax(3)1 in the (k - f + 3)th image, ..., Pdmax(f)1 in the (k)th image among the f images set as evaluation target images, and when a most downstream position is Pdmax(3)1 in the (k - f + 3)th image among the positions Pdmax(1/.../f)1 of these f images, Pdmax(3)1 as the most downstream position in the rolling direction is reset and stored as "Pdre_max(k)1" as the rolling direction position representing the most downstream position at the time of the image number k.

Similarly, a most upstream pixel in the rolling direction is selected among the positions of the pixels constituting the upstream side boundary line 2A of the reflecting light area 2 in the second zone as the divided zone i = 2, and the rolling direction position is set as Pumin(k)2 in the (k)th image. When the notation is changed to Pumin(1)2 in the (k - f + 1)th image, Pumin(2)2 in the (k - f + 2)th image, Pumin(3)2 in the (k - f + 3)th image, ..., and Pumin(f)2 in the (k)th image among the f images set as evaluation target images, and when a most upstream position is Pumin(1)2 in the (k - f + 1)th image among the positions Pumin(1/.../f)2 of these f images, Pumin(1)2 as the most upstream position is reset and stored as "Pure_min(k)2" as the rolling direction position representing the most upstream position at the time of the image number k. In addition, when a most downstream position is Pdmax(2)2 in the (k - f + 2)th image among the positions Pdmax(1/.../f)2 of the most downstream pixels in the rolling direction among the positions of the pixels constituting the downstream side boundary line 2B of the reflecting light area 2, Pdmax(2)2 as the most downstream position is reset and stored as "Pdre_max(k)2" as the rolling direction position representing the most downstream position at the time of the image number k.

The resetting of "Pure_min(k)i" and "Pdre_max(k)i" is performed from the divided zone i = 1 to the divided zone i = j.

Next, the image processing computer 80 calculates a difference between the most downstream position "Pdre_max(k)i" extracted again in the position of the downstream side boundary line 2B and the most upstream position "Pure_min(k)i" extracted again in the position of the upstream side boundary line 2A in each divided zone (i) of the reflecting light area 2 at the time point of the camera image (k), the most upstream position "Pure_min(k)i" and the most downstream position "Pdre_max(k)i" being obtained in step S210 and step S211 described above, as a maximum rolling direction length "D(k)i = [Pdre_max(k)i] - [Pure_min(k)i]" of the reflecting light area 2 (step S212).

Next, the image processing computer 80 rewrites the center position in the strip width direction of each divided zone (i) when the reflecting light area 2 is divided in the strip width direction by using a variable (x) of a position in the strip width direction in each divided zone (i), makes the maximum rolling direction length "D(k)i" of the reflecting light area 2 in each divided zone (i) obtained at the time point of the camera image (k), the maximum rolling direction length "D(k)i" being obtained in step S212, correspond to the center position (xi) in the strip width direction of the divided zone (i), sets E(xi) = D(k)i, curve-fits E(xi) expressed by using (x) to the Chebyshev polynomial of Equation (1), and calculates the Chebyshev coefficients (C₀', C₁', C₂', and C₄') from a resulting approximate equation thereof (step S213).

Next, the image processing computer 80 transmits the Chebyshev coefficients (C₁ ', C₂ ', and C₄ ') obtained in step S213 as a signal representing a detected result of the strip buckle distribution in the (k)th image to the control device 82 and the monitor 85, for example, (step S214).

Thereafter, the image processing computer 80 determines whether or not the rolling is continuing (step S215). When determining that the rolling is continuing, the image processing computer 80 returns the processing to step S209 to continue the strip shape detection processing. When determining that the rolling is completed, on the other hand, the image processing computer 80 ends the processing.

Incidentally, suppose that a third order component is not used in the Chebyshev polynomial in the present embodiment. This is because the rolling control mechanisms of the rolling mills are not configured to handle strip buckling correction for the third order component. The determination of conditions of rolled strip shapes of the first order component, the second order component, and the fourth order component that are separated and the strip buckling correction can be performed more easily by omitting computation processing and handling means for the third order component.

The image processing computer 80 can output control command signals to correct leveling, a bending force, a pair cross angle, and the like to the control device 82 on the basis of a polynomial approximation result in the strip width direction obtained by using the Chebyshev polynomial of Equation (1). Further, instead or in addition, correction information for the leveling, the bending force, the pair cross angle, and the like can be notified to the operator by outputting, to the monitor 85, a display command signal to make guidance display necessary for the correction of the leveling, the bending force, the pair cross angle, and the like.

Preferably, the image processing computer 80 can transmit a signal to the monitor 85 so as to display a graph of the respective component terms of the zeroth order component [C₀ '], the first order component [C₁ ' × x], the second order component [C₂ ' × (2x² - 1)], and the fourth order component [C₄ ' × (8x⁴ - 8x² + 1)] in the function of a vector (C₀', C₁ ', C₂', and C₄') of each order term in the Chebyshev polynomial E(x) of Equation (1) described above. A screen displayed on the monitor 85 is a screen as illustrated in FIG. 12, for example.

FIG. 12 is a diagram illustrating an example of the display screen of the monitor 85. FIG. 12 illustrates an example of distribution display of each of the zeroth order, first order, second order, and fourth order components of the Chebyshev polynomial at a position in the strip width direction (-1 ≤ x ≤ 1) within the strip width. The operator can check the display screen of the monitor 85 illustrated in FIG. 12, and perform, for example, an operation of correcting the leveling, the bending force, the pair cross angle (in a case of a pair cross rolling mill), or the like.

Of the Chebyshev polynomial coefficients of Equation (1), the coefficient (C₁') of the first order component represents an index of the unilateral buckle. Thus, an operation command signal is output to the control device 82 so as to normalize the first order component (into a target range) by operating the leveling of the roll gap cylinder 41 on the drive side (DS) and the work side (WS) on the upstream side of the camera 64 in question and/or the roll gap cylinder 51 on the drive side (DS) and the work side (WS) on the downstream side of the camera 64.

Of the Chebyshev polynomial coefficients of Equation (1), the coefficient (C₂ ') of the second order component represents an index of an edge buckle or a center buckle. Accordingly, any one or more of the following operations are performed. The second order component is normalized (into a target range) by outputting an operation command signal to the control device 82 so as to operate bending devices of the work roll / intermediate rolls of the F4 rolling mill stand 40 as a rolling mill on the upstream side of the camera 64 in question and/or the F5 rolling mill stand 50 as a rolling mill on the downstream side of the camera 64, so as to operate the pair cross angle in the case of a pair cross rolling mill, or so as to perform a shift operation on the work rolls / intermediate rolls while predicting the center buckle / edge buckle in advance in the case of a work roll shift / intermediate roll shift rolling mill because it is difficult to make a shift during rolling.

Of the Chebyshev polynomial coefficients of Equation (1), the coefficient (C₄ ') of the fourth order component represents an index of a quarter buckle. Accordingly, any one or more of the following operations are performed in order to correct the quarter buckle. A bending operation on the bending devices of the work rolls of the F4 rolling mill stand 40 as a rolling mill on the upstream side of the camera 64 in question and/or the F5 rolling mill stand 50 as a rolling mill on the downstream side of the camera 64 is performed, and further, in the case of a pair cross mill, the pair cross angle is operated together with the bending operation or singly. In a case of a six-high intermediate roll shift rolling mill, the quarter buckle is predicted in advance, and the intermediate rolls are shift-operated to an appropriate position. The fourth order component indicating the quarter buckle is normalized (into a target range so as to form a target strip shape) by outputting an operation command signal to the control device 82 so as to perform a bending operation and a pair cross angle operation. Incidentally, as for the quarter buckle, the smaller a roll diameter with respect to a roll length is, the more easily the roll is bent by the bending operation in an area of a roll width end portion, and thus the more easily the quarter buckle occurs. However, the normalization can be achieved by the above-described operations.

Effects of the present embodiment will next be described.

In the strip shape detecting device for the metal strip 1 in the rolling facility according to the present embodiment described above, the image processing computer 80: assigns numbers 1, 2, 3, ..., k, ... to the obtained images in order; determines a most upstream position Pumin(k)i of pixels constituting the upstream side boundary line position of the reflecting light area 2 and determines a most downstream position Pdmax(k)i of pixels constituting the downstream side boundary line position of the reflecting light area 2 in the rolling direction of pixel coordinates in each of the divided zones (i) (i = 1 to j) obtained by j-dividing the reflecting light area 2 in the strip width direction in the (k)th image; for each of the f images from the image number (k - F + 1) to the image number (k) as two or more obtained images, extracts data representing a position on a most upstream side as the first positional data from among F pieces of data from Pumin(k - F + 1)i to Pumin(k)i and resets the first positional data as Pure _min(k)i as data of the (k)th image; extracts data representing a position on a most downstream side as the second positional data from among F pieces of data from Pdmax(k - F + 1)i to Pdmax(k)i and resets the second positional data as Pdre_max(k)i as data of the (k)th image; calculates a difference [Pdre_max(k)i - Pure_min(k)i] between the pieces of positional data in the rolling direction for each divided zone (i), sets [Pdre_max(k)i - Pure_min(k)i] as information D(k)i corresponding to the maximum rolling direction length of the reflecting light area in the (k)th image, and makes the information D(k)i correspond to a center position in the strip width direction of the divided zone (i); providing a value indicative of a position in the strip width direction is referred to as a variable (x), standardizes a position in the strip width direction within a strip width region in the reflecting light area 2 in the image into a range of -1 ≤ x ≤ 1, uses the value of the maximum rolling direction length D(k)i = [Pdre_max(k)i - Pure_min(k)i] of the reflecting light area 2 as an index corresponding to the rolled metal strip buckle distribution in the strip width direction obtained from the (k)th image, changes a notation of the position in the strip width direction to (x), and applies the value of the maximum rolling direction length D(k)i to the Chebyshev polynomial E(x) = C₀ ' + C₁ ' × x + C₂' × (2x² - 1) + C₄ ' × (8x⁴ - 8x² + 1) (where -1 ≤ x ≤ 1) in Equation (1) including only such a zeroth order term, a first order term, a second order term, and a fourth order term of x that D(k)i = E(xi); and determines the coefficients (C₀', C₁', C₂', and C₄') of the Chebyshev polynomial by curve fitting (curve approximation) from E(xi) having j values (xi) of x, and transmits the coefficient (C₁ ') of the first order term as a signal representing a detected result of the rolled metal strip buckle distribution of the first order component in the strip width direction in the (k)th image, where xi denotes, by an (x) notation, the center position in the strip width direction of the divided zone (i) obtained by j-dividing the reflecting light area 2 in the strip width direction. Incidentally, in the range -1 ≤ x ≤ 1 of the standardized position (x) in the strip width direction, for example, x = -1 denotes a strip width edge portion position on the drive side, x = 0 denotes a strip width center position, and x = 1 denotes a strip width edge portion position on the work side. In addition, F, i, j, and k are integers.

It is thereby possible to evaluate, with high accuracy, a change in the strip buckle distribution that cannot be handled in Japanese Patent No. 6808888 described above.

In addition, the image processing computer 80 further transmits any one or more of the first order coefficient (C₁ '), the second order coefficient (C₂ '), and the fourth order coefficient (C₄ ') as a signal representing a detected result of the rolled metal strip buckle distribution(s) of one or more of the first order component, the second order component, and the fourth order component in the strip width direction. It is therefore possible to handle more changes in the strip shape.

### <Others>

It is to be noted that the present invention is not limited to the foregoing embodiments, but is susceptible of various modifications and applications. The foregoing embodiments have been described in detail in order to describe the present invention in an easily understandable manner, and are not necessarily limited to including all of the described configurations.

1...Metal Strip
2... Reflecting Light Area
2A...Upstream Side Boundary Line of Reflecting Light Area
2B...Downstream Side Boundary Line of Reflecting Light Area
10...F1 Stand
11,21,31,41,51... Roll Gap Cylinder
12,22,32,42,52... Load Detector
20...F2 Stand
30...F3 Stand
40...F4 Stand
50...F5 Stand
61,62,63,64...Camera
71,72,73,74... Looper
80...Image Processing Computer (Image Processing Unit)
81...Database
82... Controller
85... Monitor
90...Communication Line
100...Rolling Facility

## Claims

1. A strip shape detecting device for a rolled metal strip (1) in a rolling facility, the strip shape detecting device comprising:
a camera (61,62,63,64) installed so as to photograph images including a range in which a band-shaped area referred to as a reflecting light area (2) in which illumination light is reflected, the band-shaped area crossing in a strip width direction, can be observed on a surface of the metal strip (1) raised by a looper (71,72,73,74); and
an image processing unit (80) configured to detect a strip shape of the metal strip (1) on a basis of the images photographed by the camera, **characterized in that**
the image processing unit (80) being configured to:
assign numbers 1, 2, 3, ..., k, ... to the obtained images in order;
determine a most upstream position Pumin(k)i of pixel positions constituting an upstream side boundary line of the reflecting light area and determine a most downstream position Pdmax(k)i of pixel positions constituting a downstream side boundary line of the reflecting light area in a rolling direction of pixel coordinates in an (i) zone as each of divided zones (i) (i = 1 to j) obtained by j-dividing the reflecting light area in the strip width direction in an (k)th image;
for each of F images from an image number (k - F + 1) to an image number (k) as two or more obtained images, extract data representing a position on a most upstream side as first positional data from among F pieces of data from Pumin(k - F + 1)i to Pumin(k)i and reset the first positional data as Pure _min(k)i as data of the (k)th image;
extract data representing a position on a most downstream side as second positional data from among F pieces of data from Pdmax(k - F + 1)i to Pdmax(k)i and reset the second positional data as Pdre_max(k)i as data of the (k)th image;
calculate a difference [Pdre_max(k)i - Pure_min(k)i] between the pieces of positional data in the rolling direction for each divided zone (i), set [Pdre_max(k)i - Pure_min(k)i] as information D(k)i corresponding to a maximum rolling direction length of the reflecting light area in the (k)th image, and make a value of the information D(k)i correspond to a center position in the strip width direction of the divided zone (i);
providing a value indicative of a position in the strip width direction is referred to as a variable (x), standardize a position in the strip width direction within a strip width region in the reflecting light area (2) in the image into a range of -1 ≤ x ≤ 1, set values of j pieces of information D(k)i as an index corresponding to a rolled metal strip buckle distribution in the strip width direction obtained from the (k)th image, change a notation of the position in the strip width direction to (x), and apply the values of the j pieces of information D(k)i to a Chebyshev polynomial $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (where -1 ≤ x ≤ 1), the Chebyshev polynomial including only such a zeroth order term, a first order term, a second order term, and a fourth order term of x that D(k)i = E(xi); and
determine coefficients (C₀', C₁', C₂', and C₄') of the Chebyshev polynomial from E(xi) having j values (xi) of x, and transmit the coefficient (C₁') of the first order term as a signal representing a detected result of the rolled metal strip buckle distribution of a first order component in the strip width direction in the (k)th image,
where xi denotes, by an (x) notation, the center position in the strip width direction of the divided zone (i) obtained by j-dividing the reflecting light area in the strip width direction, and
F, i, j, and k are integers.

2. The strip shape detecting device for a metal strip according to claim 1, wherein the image processing unit (80) further transmits either one or more of the coefficient (C₂ ') of the second order term and the coefficient (C₄ ') of the fourth order term as a signal representing a detected result of one or more of the rolled metal strip buckle distribution(s) of the second order component and the fourth order component in the strip width direction.

3. A rolling mill comprising:
the strip shape detecting device for a metal strip (1) according to claim 1 or 2; and
a control device (82),
the control device (82) being configured to transmit any one or more operation signals related to a leveling amount, a bending force, or a pair cross angle of the rolling mill on a basis of the signal representing the detected result.

4. A strip shape detecting method for a rolled metal strip (1) in a rolling facility, the strip shape detecting method comprising:
a photographing step of photographing, by a camera, images including a range in which an area referred to as a reflecting light area (2) in which band-shaped illumination light crossing in a strip width direction is reflected can be observed on a surface of the metal strip (1) raised by a looper (71,72,73,74); and
an image processing step of detecting a strip shape of the metal strip (1) on a basis of the images photographed in the photographing step, **characterized in that**
the image processing step:
assigning numbers 1, 2, 3, ..., k, ... to the obtained images in order;
determining a most upstream position Pumin(k)i of pixel positions constituting an upstream side boundary line of the reflecting light area and determining a most downstream position Pdmax(k)i of pixel positions constituting a downstream side boundary line of the reflecting light area in a rolling direction of pixel coordinates in an (i) zone as each of divided zones (i) (i = 1 to j) obtained by j-dividing the reflecting light area in the strip width direction in an (k)th image;
for each of F images from an image number (k - F + 1) to an image number (k) as two or more obtained images, extracting data representing a position on a most upstream side as first positional data from among F pieces of data from Pumin(k - F + 1)i to Pumin(k)i and resetting the first positional data as Pure_min(k)i as data of the (k)th image;
extracting data representing a position on a most downstream side as second positional data from among F pieces of data from Pdmax(k - F + 1)i to Pdmax(k)i and resetting the second positional data as Pdre_max(k)i as data of the (k)th image;
calculating a difference [Pdre_max(k)i - Pure_min(k)i] between the pieces of positional data in the rolling direction for each divided zone (i), setting [Pdre_max(k)i - Pure_min(k)i] as information D(k)i corresponding to a maximum rolling direction length of the reflecting light area in the (k)th image, and making a value of the information D(k)i correspond to a center position in the strip width direction of the divided zone (i);
providing a value indicative of a position in the strip width direction is referred to as a variable (x), standardizing a position in the strip width direction within a strip width region in the reflecting light area (2) in the image into a range of -1 ≤ x ≤ 1, setting values of j pieces of information D(k)i as an index corresponding to a rolled metal strip buckle distribution in the strip width direction obtained from the (k)th image, changing a notation of the position in the strip width direction to (x), and applying the values of the j pieces of information D(k)i to a Chebyshev polynomial $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (where -1 ≤ x ≤ 1), the Chebyshev polynomial including only such a zeroth order term, a first order term, a second order term, and a fourth order term of x that D(k)i = E(xi); and
determining coefficients (C₀', C₁', C₂', and C₄') of the Chebyshev polynomial from E(xi) having j values (xi) of x, and transmitting the coefficient (C₁') of the first order term as a signal representing a detected result of the rolled metal strip buckle distribution of a first order component in the strip width direction in the (k)th image,
where xi denotes, by an (x) notation, the center position in the strip width direction of the divided zone (i) obtained by j-dividing the reflecting light area in the strip width direction, and
F, i, j, and k are integers.

## Patentansprüche

1. Bandformdetektionsvorrichtung für ein gewalztes Metallband (1) in einer Walzanlage, wobei die Bandformdetektionsvorrichtung umfasst:
eine Kamera (61,62,63,64), die so installiert ist, dass sie Bilder fotografiert, die einen Bereich umfassen, in dem ein als Reflexionslichtbereich (2) bezeichneter bandförmiger Bereich, in dem Beleuchtungslicht reflektiert wird, wobei der bandförmige Bereich in einer Bandbreitenrichtung verläuft, auf einer Oberfläche des Metallbands (1) beobachtet werden kann, das von einem Looper (71,72,73,74) angehoben wird; und
eine Bildverarbeitungseinheit (80), die dazu konfiguriert ist, eine Bandform des Metallbands (1) auf der Grundlage der von der Kamera fotografierten Bilder zu detektieren, **dadurch gekennzeichnet, dass**
die Bildverarbeitungseinheit (80) dazu konfiguriert ist:
den erhaltenen Bildern der Reihe nach Nummern 1, 2, 3, ..., k, ... zuzuordnen;
eine am weitesten stromaufwärts liegende Position Pumin(k)i von Pixelpositionen, die eine stromaufwärts liegende Grenzlinie des Reflexionslichtbereichs bilden, zu bestimmen und eine am weitesten stromabwärts liegende Position Pdmax(k)i von Pixelpositionen, die eine stromabwärts liegende Grenzlinie des Reflexionslichtbereichs bilden, in einer Walzrichtung von Pixelkoordinaten in einer (i)-Zone als jede der geteilten Zonen (i) (i = 1 bis j) zu bestimmen, die durch j-faches Teilen des Reflexionslichtbereichs in der Bandbreitenrichtung in einem (k)-ten Bild erhalten werden;
für jedes von F Bildern von einer Bildnummer (k - F + 1) bis zu einer Bildnummer (k) als zwei oder mehr erhaltene Bilder, Daten, die eine Position auf einer am weitesten stromaufwärts liegenden Seite darstellen, als erste Positionsdaten aus F Datenstücken von Pumin(k - F + 1)i bis Pumin(k)i zu extrahieren und die ersten Positionsdaten als Pure_min(k)i als Daten des (k)-ten Bildes zurückzusetzen;
Daten, die eine Position auf einer am weitesten stromabwärts liegenden Seite darstellen, als zweite Positionsdaten aus F Datenstücken von Pdmax(k - F + 1)i bis Pdmax(k)i zu extrahieren und die zweiten Positionsdaten als Pdre_max(k)i als Daten des (k)-ten Bildes zurückzusetzen;
eine Differenz [Pdre_max(k)i - Pure_min(k)i] zwischen den Positionsdaten in der Walzrichtung für jede geteilte Zone (i) zu berechnen, [Pdre_max(k)i - Pure_min(k)i] als Information D(k)i entsprechend einer maximalen Walzrichtungslänge des Reflexionslichtbereichs in dem (k)-ten Bild zu setzen und einen Wert der Information D(k)i einer Mittenposition in der Bandbreitenrichtung der geteilten Zone (i) entsprechen zu lassen;
wenn ein Wert, der eine Position in der Bandbreitenrichtung angibt, als eine Variable (x) bezeichnet wird, eine Position in der Bandbreitenrichtung innerhalb eines Bandbreitenbereichs in dem Reflexionslichtbereich (2) in dem Bild in einen Bereich von -1 ≤ x ≤ 1 zu standardisieren, Werte von j Informationsstücken D(k)i als einen Index entsprechend einer gewalzten Metallbandwelligkeitsverteilung in der Bandbreitenrichtung, die aus dem (k)-ten Bild erhalten wird, zu setzen, eine Notation der Position in der Bandbreitenrichtung zu (x) zu ändern und die Werte der j Informationsstücke D(k)i auf ein Tschebyscheff-Polynom $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (wobei -1 ≤ x ≤ 1), anzuwenden, wobei das Tschebyscheff-Polynom nur ein Nullordnungsglied, ein Erstordnungsglied, ein Zweitordnungsglied und ein Viertordnungsglied von x umfasst, so dass D(k)i = E(xi); und
Koeffizienten (C₀', C₁', C₂' und C₄') des Tschebyscheff-Polynoms aus E(xi) mit j Werten (xi) von x zu bestimmen und den Koeffizienten (C₁') des Erstordnungsglieds als ein Signal, das ein detektiertes Ergebnis der gewalzten Metallbandwelligkeitsverteilung einer Erstordnungskomponente in der Bandbreitenrichtung in dem (k)-ten Bild darstellt, zu übertragen,
wobei xi durch eine (x)-Notation die Mittenposition in der Bandbreitenrichtung der geteilten Zone (i) bezeichnet, die durch j-faches Teilen des Reflexionslichtbereichs in der Bandbreitenrichtung erhalten wird, und
F, i, j und k ganze Zahlen sind.

2. Bandformdetektionsvorrichtung für ein Metallband nach Anspruch 1, wobei die Bildverarbeitungseinheit (80) ferner entweder einen oder mehrere des Koeffizienten (C₂') des Zweitordnungsglieds und des Koeffizienten (C₄') des Viertordnungsglieds als ein Signal überträgt, das ein detektiertes Ergebnis von einer oder mehreren der gewalzten Metallbandwelligkeitsverteilung(en) der Zweitordnungskomponente und der Viertordnungskomponente in der Bandbreitenrichtung darstellt.

3. Walzwerk, umfassend:
die Bandformdetektionsvorrichtung für ein Metallband (1) nach Anspruch 1 oder 2; und
eine Steuervorrichtung (82),
wobei die Steuervorrichtung (82) dazu konfiguriert ist, auf der Grundlage des Signals, das das detektierte Ergebnis darstellt, ein beliebiges oder mehrere Betriebssignale in Bezug auf einen Planierungsbetrag, eine Biegekraft oder einen Paarkreuzwinkel des Walzwerks zu übertragen.

4. Bandformdetektionsverfahren für ein gewalztes Metallband (1) in einer Walzanlage, wobei das Bandformdetektionsverfahren umfasst:
einen Fotografierschritt des Fotografierens, durch eine Kamera, von Bildern, die einen Bereich umfassen, in dem ein als Reflexionslichtbereich (2) bezeichneter Bereich, in dem ein in einer Bandbreitenrichtung verlaufendes bandförmiges Beleuchtungslicht reflektiert wird, auf einer Oberfläche des Metallbands (1) beobachtet werden kann, das von einem Looper (71,72,73,74) angehoben wird; und
einen Bildverarbeitungsschritt des Detektierens einer Bandform des Metallbands (1) auf der Grundlage der in dem Fotografierschritt fotografierten Bilder, **dadurch gekennzeichnet, dass**
der Bildverarbeitungsschritt:
den erhaltenen Bildern der Reihe nach Nummern 1, 2, 3, ..., k, ... zuordnet;
eine am weitesten stromaufwärts liegende Position Pumin(k)i von Pixelpositionen, die eine stromaufwärts liegende Grenzlinie des Reflexionslichtbereichs bilden, bestimmt und eine am weitesten stromabwärts liegende Position Pdmax(k)i von Pixelpositionen, die eine stromabwärts liegende Grenzlinie des Reflexionslichtbereichs bilden, in einer Walzrichtung von Pixelkoordinaten in einer (i)-Zone als jede der geteilten Zonen (i) (i = 1 bis j), die durch j-faches Teilen des Reflexionslichtbereichs in der Bandbreitenrichtung in einem (k)-ten Bild erhalten werden, bestimmt;
für jedes von F Bildern von einer Bildnummer (k - F + 1) bis zu einer Bildnummer (k) als zwei oder mehr erhaltene Bilder, Daten, die eine Position auf einer am weitesten stromaufwärts liegenden Seite darstellen, als erste Positionsdaten aus F Datenstücken von Pumin(k - F + 1)i bis Pumin(k)i extrahiert und die ersten Positionsdaten als Pure_min(k)i als Daten des (k)-ten Bildes zurücksetzt;
Daten, die eine Position auf einer am weitesten stromabwärts liegenden Seite darstellen, als zweite Positionsdaten aus F Datenstücken von Pdmax(k - F + 1)i bis Pdmax(k)i extrahiert und die zweiten Positionsdaten als Pdre_max(k)i als Daten des (k)-ten Bildes zurücksetzt;
eine Differenz [Pdre_max(k)i - Pure_min(k)i] zwischen den Positionsdaten in der Walzrichtung für jede geteilte Zone (i) berechnet, [Pdre_max(k)i - Pure_min(k)i] als Information D(k)i entsprechend einer maximalen Walzrichtungslänge des Reflexionslichtbereichs in dem (k)-ten Bild setzt und einen Wert der Information D(k)i einer Mittenposition in der Bandbreitenrichtung der geteilten Zone (i) entsprechen lässt;
wenn ein Wert, der eine Position in der Bandbreitenrichtung angibt, als eine Variable (x) bezeichnet wird, eine Position in der Bandbreitenrichtung innerhalb eines Bandbreitenbereichs in dem Reflexionslichtbereich (2) in dem Bild in einen Bereich von -1 ≤ x ≤ 1 standardisiert, Werte von j Informationsstücken D(k)i als einen Index entsprechend einer gewalzten Metallbandwelligkeitsverteilung in der Bandbreitenrichtung, die aus dem (k)-ten Bild erhalten wird, setzt, eine Notation der Position in der Bandbreitenrichtung zu (x) ändert und die Werte der j Informationsstücke D(k)i auf ein Tschebyscheff-Polynom $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (wobei -1 ≤ x ≤ 1), anwendet, wobei das Tschebyscheff-Polynom nur ein Nullordnungsglied, ein Erstordnungsglied, ein Zweitordnungsglied und ein Viertordnungsglied von x umfasst, so dass D(k)i = E(xi); und
Koeffizienten (C₀', C₁', C₂' und C₄') des Tschebyscheff-Polynoms aus E(xi) mit j Werten (xi) von x bestimmt und den Koeffizienten (C₁') des Erstordnungsglieds als ein Signal, das ein detektiertes Ergebnis der gewalzten Metallbandwelligkeitsverteilung einer Erstordnungskomponente in der Bandbreitenrichtung in dem (k)-ten Bild darstellt, überträgt,
wobei xi durch eine (x)-Notation die Mittenposition in der Bandbreitenrichtung der geteilten Zone (i) bezeichnet, die durch j-faches Teilen des Reflexionslichtbereichs in der Bandbreitenrichtung erhalten wird, und
F, i, j und k ganze Zahlen sind.

## Revendications

1. Dispositif de détection de forme de bande pour une bande métallique laminée (1) dans une installation de laminage, le dispositif de détection de forme de bande comprenant :
un appareil photographique (61, 62, 63, 64) installé de façon à photographier des images incluant une plage dans laquelle une zone en forme de bande appelée une zone réfléchissant la lumière (2) dans laquelle une lumière d'éclairage est réfléchie, la zone en forme de bande traversant dans un sens de la largeur de bande, peut être observée sur une surface de la bande métallique (1) surélevée par un boucleur (71, 72, 73, 74) ; et
une unité (80) de traitement d'images configurée pour détecter une forme de bande de la bande métallique (1) sur une base des images photographiées par l'appareil photographique, **caractérisé en ce que**
l'unité (80) de traitement d'images étant configurée pour :
attribuer des numéros 1, 2, 3, ..., k, ... aux images obtenues dans l'ordre ;
déterminer une position la plus amont Pumin(k)i de positions de pixels constituant une ligne de limite latérale amont de la zone réfléchissant la lumière et déterminer une position la plus aval Pdmax(k)i de positions de pixels constituant une ligne de limite latérale aval de la zone réfléchissant la lumière dans un sens de laminage de coordonnées de pixels dans une zone (i) comme chacune de zones divisées (i) (i = 1 à j) obtenues en divisant par j la zone réfléchissant la lumière dans le sens de la largeur de bande dans une k^{ième} image ;
pour chacune de F images d'un numéro d'image (k - F + 1) à un numéro d'image (k) comme deux images obtenues ou plus, extraire des données représentant une position sur un côté le plus amont comme des premières données positionnelles parmi F éléments de données de Pumin(k - F + 1)i à Pumin(k)i et réinitialiser les premières données positionnelles comme Pure_min(k)i comme données de la k^{ième} image ;
extraire des données représentant une position sur un côté le plus aval comme des deuxièmes données positionnelles parmi F éléments de données de Pdmax(k - F + 1)i à Pdmax(k)i et réinitialiser les deuxièmes données positionnelles comme Pdre_max(k)i comme données de la k^{ième} image ;
calculer une différence [Pdre_max(k)i - Pure_min(k)i] entre les éléments de données positionnelles dans le sens de laminage pour chaque zone divisée (i), définir [Pdre_max(k)i - Pure_min(k)i] comme une information D(k)i correspondant à une longueur maximum de sens de laminage de la zone réfléchissant la lumière dans la k^{ième} image, et amener une valeur de l'information D(k)i à correspondre à une position de centre dans le sens de la largeur de bande de la zone divisée (i) ;
sachant qu'une valeur indicatrice d'une position dans le sens de la largeur de bande est appelée une variable (x), normaliser une position dans le sens de la largeur de bande à l'intérieur d'une région de largeur de bande dans la zone réfléchissant la lumière (2) dans l'image dans une plage de -1 ≤ x ≤ 1, fixer des valeurs de j éléments d'information D(k)i comme un indice correspondant à une distribution de boucles de bande métallique laminée dans le sens de la largeur de bande obtenue à partir de la k^{ième} image, remplacer une notation de la position dans le sens de la largeur de bande par (x), et appliquer les valeurs des j éléments d'information D(k)i à un polynôme de Tchebychev $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (où -1 ≤ x ≤ 1),
le polynôme de Tchebychev incluant uniquement un terme de zéroième ordre, un terme de premier ordre, un terme de deuxième ordre, et un terme de quatrième ordre de x tels que D(k)i = E(xi) ; et
déterminer des coefficients (C₀', C₁', C₂', et C₄') du polynôme de Tchebychev à partir de E(xi) ayant j valeurs (xi) de x, et transmettre le coefficient (C₁') du terme de premier ordre comme un signal représentant un résultat détecté de la distribution de boucles de bande métallique laminée d'un composant de premier ordre dans le sens de la largeur de bande dans la k^{ième} image,
où xi dénote, par une notation (x), la position de centre dans le sens de la largeur de bande de la zone divisée (i) obtenue en divisant par j la zone réfléchissant la lumière dans le sens de la largeur de bande, et
F, i, j, et k sont des entiers.

2. Dispositif de détection de forme de bande pour une bande métallique selon la revendication 1, dans lequel l'unité (80) de traitement d'images transmet en outre soit un, soit plus parmi le coefficient C₂' du terme de deuxième ordre et le coefficient C₄' du terme de quatrième ordre comme un signal représentant un résultat détecté d'une ou plusieurs parmi la ou les distribution(s) de boucles de bande métallique laminée du composant de deuxième ordre et du composant de quatrième ordre dans le sens de la largeur de bande.

3. Installation de laminage comprenant :
le dispositif de détection de forme de bande pour une bande métallique (1) selon la revendication 1 ou 2 ; et
un dispositif (82) de commande,
le dispositif (82) de commande étant configuré pour transmettre un quelconque ou plusieurs signaux d'opération se rapportant à une quantité de mise de niveau, une force de flexion, ou un angle de croisement de paire du laminoir sur une base du signal représentant le résultat détecté.

4. Procédé de détection de forme de bande pour une bande métallique laminée (1) dans une installation de laminage, le procédé de détection de forme de bande comprenant :
une étape de photographie pour photographier, par un appareil photographique, des images incluant une plage dans laquelle une zone appelée une zone réfléchissant la lumière (2) dans laquelle une lumière d'éclairage en forme de bande traversant dans un sens de la largeur de bande est réfléchie peut être observée sur une surface de la bande métallique (1) surélevée par un boucleur (71, 72, 73, 74) ; et
une étape de traitement d'images pour détecter une forme de bande de la bande métallique (1) sur une base des images photographiées à l'étape de photographie, **caractérisé en ce que**
l'étape de traitement d'images :
attribuant des numéros 1, 2, 3, ..., k, ... aux images obtenues dans l'ordre ;
déterminant une position la plus amont Pumin(k)i de positions de pixels constituant une ligne de limite latérale amont de la zone réfléchissant la lumière et déterminant une position la plus aval Pdmax(k)i de positions de pixels constituant une ligne de limite latérale aval de la zone réfléchissant la lumière dans un sens de laminage de coordonnées de pixels dans une zone (i) comme chacune de zones divisées (i) (i = 1 à j) obtenues en divisant par j la zone réfléchissant la lumière dans le sens de la largeur de bande dans une k^{ième} image ;
pour chacune de F images d'un numéro d'image (k - F + 1) à un numéro d'image (k) comme deux images obtenues ou plus, extrayant des données représentant une position sur un côté le plus amont comme des premières données positionnelles parmi F éléments de données de Pumin(k - F + 1)i à Pumin(k)i et réinitialisant les premières données positionnelles comme Pure_min(k)i comme données de la k^{ième} image ;
extrayant des données représentant une position sur un côté le plus aval comme des deuxièmes données positionnelles parmi F éléments de données de Pdmax(k - F + 1)i à Pdmax(k)i et réinitialisant les deuxièmes données positionnelles comme Pdre_max(k)i comme données de la k^{ième} image ;
calculant une différence [Pdre_max(k)i - Pure_min(k)i] entre les éléments de données positionnelles dans le sens de laminage pour chaque zone divisée (i), définissant [Pdre_max(k)i - Pure_min(k)i] comme une information D(k)i correspondant à une longueur maximum de sens de laminage de la zone réfléchissant la lumière dans la k^{ième} image, et amenant une valeur de l'information D(k)i à correspondre à une position de centre dans le sens de la largeur de bande de la zone divisée (i) ;
sachant qu'une valeur indicatrice d'une position dans le sens de la largeur de bande est appelée une variable (x), normalisant une position dans le sens de la largeur de bande à l'intérieur d'une région de largeur de bande dans la zone réfléchissant la lumière (2) dans l'image dans une plage de -1 ≤ x ≤ 1, fixant des valeurs de j éléments d'information D(k)i comme un indice correspondant à une distribution de boucles de bande métallique laminée dans le sens de la largeur de bande obtenue à partir de la k^{ième} image, remplaçant une notation de la position dans le sens de la largeur de bande par (x), et appliquant les valeurs des j éléments d'information D(k)i à un polynôme de Tchebychev $E \left(x\right) = {C}_{0} ′ + {C}_{1} ′ \times x + {C}_{2} ′ \times \left(2{x}^{2}-1\right) + {C}_{4} ′ \times \left(8{x}^{4}-8{x}^{2}+1\right)$ (où -1 ≤ x ≤ 1),
le polynôme de Tchebychev incluant uniquement un terme de zéroième ordre, un terme de premier ordre, un terme de deuxième ordre, et un terme de quatrième ordre de x tels que D(k)i = E(xi) ; et
déterminant des coefficients (C₀', C₁', C₂', et C₄') du polynôme de Tchebychev à partir de E(xi) ayant j valeurs (xi) de x, et transmettant le coefficient (C₁') du terme de premier ordre comme un signal représentant un résultat détecté de la distribution de boucles de bande métallique laminée d'un composant de premier ordre dans le sens de la largeur de bande dans la k^{ième} image,
où xi dénote, par une notation (x), la position de centre dans le sens de la largeur de bande de la zone divisée (i) obtenue en divisant par j la zone réfléchissant la lumière dans le sens de la largeur de bande, et
F, i, j, et k sont des entiers.
